# EUROPEAN PATENT SPECIFICATION

(11) **EP 4 025 879 B1**
(45) Date of publication and mention of the grant of the patent: **30.10.2024**
(21) Application number: 20781611.7
(22) Date of filing: 02.09.2020
(51) Int. Cl.: G01F 1/10, G01F 1/115, G01F 15/18, G01F 15/14

(54) **AXIAL FLOWMETER**
AXIALDURCHFLUSSMESSER
DÉBITMÈTRE AXIAL

(30) Priority: 02.09.2019 IT 201900015386
(43) Date of publication of application: 13.07.2022
(73) Proprietor: R.P.E. S.r.l., 22070 Carbonate (CO) (IT)
(72) Inventor: TACCONI, Luca, 22070 Carbonate (CO) (IT)
(74) Representative: Studio Torta S.p.A.
(86) International application number: PCT/IB2020/058172
(87) International publication number: WO 2021/044311

(56) References cited:
- AU-A1- 2018 260 822
- GB-A- 1 492 374
- JP-A- H0 961 205
- US-A- 3 880 003
- US-A- 4 232 549
- US-A- 5 433 118

## Description

### CROSS-REFERENCE TO RELATED APPLICATIONS

This patent application claims priority from Italian patent application no. 102019000015386 filed on September 2, 2019.

### TECHNICAL FIELD

The invention relates to an axial flowmeter, in particular for household appliances.

In particular, the invention relates to an axial flowmeter to measure the flow rate of a fluid in a duct, which is used in hydraulic circuits of coffee machines and water dispensers, without for this reason limiting the wide range of possible applications of the invention.

### BACKGROUND ART

Different types of flowmeters are currently known and exploit different operating principles. Among them, axial flowmeters are known, in which the fluid flowing along the axis of the flowmeter causes the rotation of an impeller around said axis and a sensor detects the rotary motion of the impeller and provides signals concerning the fluid flow rate.

As examples, documents AU 2018,260,822, JP H0961205 and US 5,433,118 disclose respective axial flowmeters configured for measuring the flow rate of fluid in a duct.

The correct measurement of the flow rate depends on design parameters and on the correct installation of the different components.

Known axial flowmeters do not allow users to check whether the different components were mounted correctly.

### DISCLOSURE OF INVENTION

The object of the invention is obviate the drawbacks of the prior art.

According to the invention, there is provided an axial flowmeter to measure the flow rate of a flow of fluid in a duct, the flowmeter comprising:
- a tubular body extending along a longitudinal axis and configured to convey the fluid;
- a shaft located inside the tubular body and configured to rotate around the longitudinal axis;
- a first and a second support, each mounted in the tubular body and coupled to a respective end of the shaft in a rotary manner so as to allow the shaft to rotate around the longitudinal axis;
- an impeller fixed to the shaft and configured to rotate clockwise or counterclockwise around the longitudinal axis depending on the direction of the flow of fluid; and
- a sensor coupled to the tubular body and configured to detect the rotation speed of the impeller;

wherein the impeller has only two vanes, which are arranged on opposite sides of the shaft, extend in a direction parallel to the longitudinal axis and have two respective coplanar central portions;
and wherein each vane has two respective end portions inclined with respect to the central portion with substantially the same inclinations with respect to the respective central portion;
the two vanes extending along the same plane and the inclined end portions forming an angle of attack with the direction of the flow so as to facilitate the rotation of the impeller around the longitudinal axis clockwise or counterclockwise depending on the direction of the fluid flow.

In this way, it is possible to measure the flow rates of a fluid whose flow is variable depending on the direction.

In other words, it is possible to measure flow rate values inside ducts where the fluid alternatively flows in both directions.

Thanks to the two vanes, the fluid flow determines the rotation of the impeller around the longitudinal axis.

Furthermore, thanks to the two sole vanes, the fluid flow is subjected to small pressure drops when it flows through the flowmeter.

In particular, the flowmeter comprises an identification member, which is fixed to the shaft or to the impeller and is correlated with the shape of the impeller; the tubular body being made of a transparent material.

Thanks to the invention, users can visually check whether the components of the flowmeter are correctly fitted in the tubular body and install the flowmeter without having to worry about the direction of insertion into the duct, with a consequent ease of installation and saving of time.

Indeed, the flowmeter is fitted with impellers with different geometries depending on the ranges of flow rate values to be measured for which it is used, whereas the geometry of the remaining components of the flowmeter remains unchanged. Therefore, the identification member allows users to identify the flowmeter suited for a given use, even when the geometric differences between the impellers are not easily perceivable.

More in detail, thanks to the identification member, it is possible to visually identify, from the outside of the tubular body, the different type of impeller present in the tubular body of the flowmeter.

In this way, the installation of the flowmeter is further simplified.

In particular, the identification member is a coloured ring.

In this way, the type of impeller present inside the flowmeter can be visually identified even when the flowmeter is being used and the impeller is rotating.

In particular, the impeller is at least partially made of sintered magnetic material, in particular by moulding sintered magnetic material on the shaft.

In this way, the fluid flow rate can be measured by detecting magnetic field changes caused by the rotation of the impeller around the longitudinal axis.

Furthermore, the impeller can be manufactured in a simple, quick and economic fashion.

In particular, the angle between each central portion and the respective end portions ranges from 10° to 30°.

In this way, the rotation speed of the impeller around the longitudinal axis is within a given speed range.

In particular, the first and second supports are substantially equal to one another and face one another.

In this way, the first and the second support are mounted in a symmetrical manner relative to a plane going through the centre of the flowmeter and transverse relative to the longitudinal axis.

In particular, each one of the first and second support comprises a respective annular body; and a respective cylindrical body configured to be coupled to the respective end of the shaft.

In this way, the first and the second support can be coupled to the tubular body and the shaft can be coupled to the respective cylindrical body so as to allow the shaft to rotate around the longitudinal axis.

In particular, each end of the shaft is tapered; each cylindrical body having a recess so as to house a respective end of the shaft.

In this way, the shaft can be supported and, at the same time, the shaft can rotate around the longitudinal axis with no need for bearings.

In particular, the flowmeter comprises a seat fixed to the tubular body and configured to house the sensor.

In this way, the sensor can be fixed to the tubular body.

In particular, the sensor is configured to detect the magnetic field variations caused by the rotation of the impeller around the longitudinal axis; in particular, the sensor is a Hall effect sensor.

In this way, the sensor emits electrical signals depending on the rotation speed of the impeller.

A further object of the invention is to provide a method to manufacture a flowmeter, which reduces at least one of the drawbacks of the prior art.

According to the invention, there is provided a method to manufacture an axial flowmeter to measure the flow rate of a fluid, the method comprising:
- providing a shaft extending along a longitudinal axis;
- moulding an impeller of sintered magnetic material on the shaft;
- inserting one between the first and the second support inside a transparent tubular body;
- inserting the shaft and the impeller inside the tubular body;
- inserting the other one between the first and the second support inside the tubular body, so as to couple the ends of the shaft to the first and the second support inside the tubular body; and
- placing a sensor on the outside of the tubular body to detect the rotation speed of the impeller.

In this way, a flowmeter can be manufactured and assembled in a simple, quick and cost-effective fashion.

### BRIEF DESCRIPTION OF THE DRAWINGS

Further features and advantages of the invention will be best understood upon perusal of the following description of a non-limiting embodiment thereof, with reference to the accompanying Figures, wherein:
- Figure 1 is a perspective view, with parts removed for greater clarity, of a flowmeter according to the invention;
- Figure 2 is a side elevation view, with parts removed for greater clarity, of the flowmeter of Figure 1;
- Figure 3 is a cross-section view, with parts removed for greater clarity, of the flowmeter of Figure 1 along cross-section lines III-III; and
- Figure 4 is a perspective view, with parts removed for greater clarity, of a detail of the flowmeter of Figure 1.

### BEST MODE FOR CARRYING OUT THE INVENTION

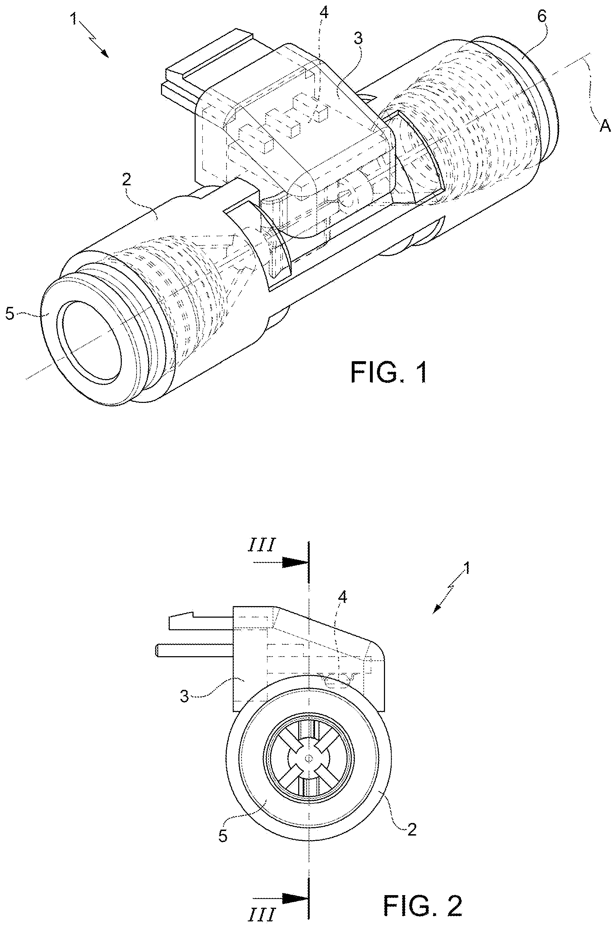

With reference to Figures 1, 2 and 3, number 1 indicates, as a whole, an axial flowmeter to measure the flow rate of a fluid inside a duct, which finds particular application in the field of household appliances.

In particular, the flowmeter 1 is used to measure the flow rate of a fluid in hydraulic circuits of coffee machines and water dispensers, without for this reason limiting the wide range of possible applications of the invention.

The flowmeter 1 comprises a tubular body 2 extending along a longitudinal axis A, where the fluid flow flows; a seat 3, which is fixed on the outside of the central portion of the tubular body 2; a sensor 4, which is housed in the seat 3; and two manifolds 5 and 6, which are fixed to a respective end of the tubular body 2 and are configured to connect the tubular body 2 to a respective duct.

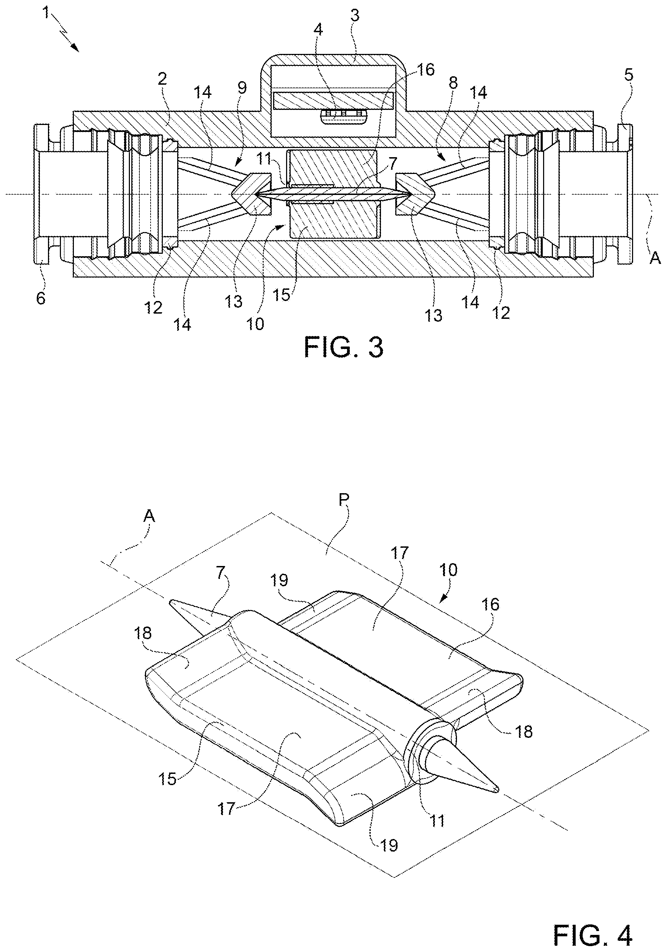

With reference to Figure 3, the flowmeter 1 comprises a shaft 7, which is arranged inside the tubular body 2 and is configured to rotate around the longitudinal axis A; two supports 8 and 9, each fixed inside the tubular body 2 and coupled to a respective end of the shaft 7; an impeller 10, which is fixed to the shaft 7; and an identification member 11, which preferably is a coloured ring and is fixed to the shaft 7.

The tubular body 2 is made of a transparent material. In particular, the tubular body 2 is made of a plastic material, preferably PC or PPSU.

The tubular body 2 has a seat in the area of each end for housing a respective manifold 5 or 6.

The manifolds 5 and 6 are substantially equal and are arranged in the respective seat in a symmetrical manner relative a plane going through the centre of the flowmeter 1 and transverse to the longitudinal axis A.

The supports 8 and 9 are substantially equal and face one another in a symmetrical manner relative a plane going through the centre of the flowmeter 1 and transverse to the longitudinal axis A.

Each support 8 and 9 comprises a respective annular body 12, which is arranged around the longitudinal axis A and is configured to be fixed inside the tubular body 2; a respective cylindrical body 13, which is configured to be coupled to the respective end of the shaft 7; and four respective supports 14, which connect each annular body 12 to the respective cylindrical body 13.

Each annular body 12 is housed in a respective annular seat obtained in the tubular body 2.

The number of supports 14 can be different and does not limit the invention.

Each cylindrical body 13 has a recess with a conical shape so as to be coupled to the respective end of the shaft 7.

Each end of the shaft 7 is tapered so as to be inserted into the recess of the respective cylindrical body 13.

In other words, the ends of the shaft 7 have a conical shape and are coupled to the recess of the respective cylindrical body 13 in order to allow the shaft 7 to rotate around the longitudinal axis A.

The impeller 10 is made of a sintered magnetic material and is configured to rotate clockwise or counterclockwise around the longitudinal axis A depending on the direction of the fluid flow.

In other words, the impeller 10 is configured to alternatively change its direction of rotation depending on the direction of the fluid flow.

The sensor 4 is configured to detect the rotation speed of the impeller 10.

More in detail, the sensor 4 is a Hall effect sensor, which is configured to measure the rotation speed of the impeller 10 by detecting the magnetic field variations caused by the rotation of the impeller 10 around the longitudinal axis A.

According to an alternative embodiment, the sensor 4 is an optical sensor, which is configured to detect the rotation speed of the impeller 10 by means of photosensors or photodetectors

According to a further embodiment, the sensor 4 is an ultrasound sensor or an accelerometer, which is configured to detect the vibrations caused by the rotation of the impeller 10 around the longitudinal axis A.

With reference to Figures 3 and 4, the impeller 10 is manufactured by overmoulding sintered magnetic material on the shaft 7.

The impeller 10 comprises two vanes 15 and 16, which are arranged on opposite sides relative to the shaft 7 and each extend in a direction parallel to the longitudinal axis A.

With reference to Figure 4, the vanes 15 and 16 have two respective coplanar central portions 17 and two respective end portions 18 and 19, which are inclined relative to the central portions 17.

In other words, in the vanes 15 and 16, the central portions 17 extend along a plane P, on which the longitudinal axis A lies, and the end portions 18 and 19 are inclined relative to the plane P.

The end portions 18 and 19 substantially have the same inclination relative to the respective central portion 17, in particular the angle between each central portion 17 and the respective end portions 18 and 19 ranges from 10° to 30°.

In other words, the end portions 18 and 19 substantially have the same inclination relative to the plane P.

Furthermore, the end portion 18 of the vane 15 is adjacent to the end portion 19 of the vane 16.

The identification member 11 is fixed in the area of an end of the impeller 10 and is configured to visually stand out from the shaft 7 and the impeller 10.

In use and with reference to Figure 3, the fluid flow flows inside the tubular body 2 and, by interacting with the vanes 15 and 16, causes the rotation of the impeller 10 around the longitudinal axis A.

When each vane 15 and 16 gets close to the sensor 4 there is a change in the magnetic field in the proximity of the sensor 4, which detects the magnetic field variation and emits an electrical signal.

In other words, the rotation of the impeller 10 causes the sensor 4 to emit an electrical impulse when a vane 15 or 16 passes close to the sensor 4.

By calculating the number of electrical impulses emitted per unit of time it is possible to determine the rotation speed of the impeller 10, thus obtaining the value of the flow rate of the fluid flowing through the flowmeter 1.

When, depending on the specific circumstances, the fluid flow changes direction, the impeller 10 changes rotation direction.

The identification member 11 allows for an immediate visual identification of the particular geometry of the impeller 10 even when the flowmeter 1 is being used.

Finally, the invention can evidently be subjected to variants to the embodiments described herein, though without going beyond the scope of protection set forth in the appended claims.

## Claims

1. An axial flowmeter to measure the flow rate of a flow of fluid in a duct, the flowmeter (1) comprising:
- a tubular body (2) extending along a longitudinal axis (A) and configured to convey the fluid;
- a shaft (7) located inside the tubular body (2) and configured to rotate around the longitudinal axis (A);
- a first and a second support (8, 9), each of which is mounted into the tubular body (2) and is rotatably coupled to a respective end of the shaft (7) so as to allow the rotation of the shaft (7) around the longitudinal axis (A);
- an impeller (10) fixed to the shaft (7) and configured to rotate clockwise or counterclockwise around the longitudinal axis (A) depending on the direction of the flow of fluid; and
- a sensor (4) coupled to the tubular body (2) and configured to detect the rotation speed of the impeller (10);
wherein the impeller (10) has just two vanes (15, 16), which are arranged on opposite sides of the shaft (7),
the axial flow meter being **characterised in that** the two vanes (15, 16) extend in a direction parallel to the longitudinal axis (A) and have two respective coplanar central portions (17);
and **in that** each vane (15, 16) has two respective end portions (18, 19) inclined with respect to the central portion (17) with substantially the same inclinations with respect to the respective central portion (17);
the two vanes (15, 16) extending along the same plane (P) and the inclined end portions (18, 19) forming an angle of attack with the direction of the flow so as to facilitate the rotation of the impeller (10) around the longitudinal axis (A) clockwise or counterclockwise depending on the direction of the fluid flow.

2. The flowmeter as claimed in Claim 1, and comprising an identification member (11), which is fixed to the shaft (7) or to the impeller (10) and is correlated to the shape of the impeller (10); the tubular body (2) being made of a transparent material.

3. The flowmeter as claimed in Claim 2, wherein the identification member (11) is a coloured ring.

4. The flowmeter as claimed in any one of the foregoing Claims, wherein the impeller (10) is at least partially made of sintered magnetic material, in particular by moulding sintered magnetic material on the shaft (7).

5. The flowmeter as claimed in any one of the foregoing Claims, wherein the angle between each central portion (17) and the respective end portions (18, 19) is between 10° and 30°.

6. The flowmeter as claimed in any of the foregoing Claims, wherein the first and second supports (8, 9) are substantially equal to each other and are arranged facing each other.

7. The flowmeter as claimed in Claim 6, wherein each one of the first and second supports (8, 9) comprises a respective annular body (12); and a respective cylindrical body (13) configured to couple with the respective end of the shaft (7).

8. The flowmeter as claimed in Claim 7, wherein each end of the shaft (7) is tapered; each cylindrical body (13) has a recess to house one respective end of the shaft (7).

9. The flowmeter as claimed in any of the foregoing Claims, and comprising a seat (3) fixed to the tubular body (2) and configured to house the sensor (4).

10. The flowmeter as claimed in any of the Claims 2 to 9, wherein the sensor (4) is configured to detect the magnetic field variations caused by the rotation of the impeller (10) around the longitudinal axis (A); in particular, the sensor (4) is a Hall effect sensor.

## Patentansprüche

1. Axialdurchflussmesser, um die Durchflussmenge eines Stroms von Fluid in einem Kanal zu messen, der Durchflussmesser (1) umfassend:
- einen rohrförmigen Körper (2), der sich entlang einer Längsachse (A) erstreckt und konfiguriert ist, um das Fluid zu befördern;
- eine Welle (7), die sich innerhalb des rohrförmigen Körpers (2) befindet und konfiguriert ist, um sich um die Längsachse (A) zu drehen;
- eine erste und eine zweite Halterung (8, 9), die jeweils in dem rohrförmigen Körper (2) montiert sind und mit einem jeweiligen Ende der Welle (7) drehbar gekoppelt sind, um die Drehung der Welle (7) um die Längsachse (A) zu ermöglichen;
- ein Laufrad (10), das an der Welle (7) befestigt ist und konfiguriert ist, um sich je nach Richtung des Stroms von Fluid im Uhrzeigersinn oder gegen den Uhrzeigersinn um die Längsachse (A) zu drehen; und
- einen Sensor (4), der mit dem rohrförmigen Körper (2) gekoppelt ist und konfiguriert ist, um die Drehgeschwindigkeit des Laufrads (10) zu erfassen;
wobei das Laufrad (10) nur zwei Schaufeln (15, 16) aufweist, die auf gegenüberliegenden Seiten der Welle (7) angeordnet sind, wobei der Axialdurchflussmesser **dadurch gekennzeichnet ist, dass** die zwei Schaufeln (15, 16) sich in eine Richtung parallel zu der Längsachse (A) erstrecken und jeweils zwei koplanare Mittelabschnitte (17) aufweisen;
und **dadurch, dass** jede Schaufel (15, 16) zwei jeweilige Endabschnitte (18, 19) aufweist, die in Bezug auf den Mittelabschnitt (17) geneigt sind, mit im Wesentlichen der gleichen Neigung in Bezug auf den jeweiligen Mittelabschnitt (17);
wobei die zwei Schaufeln (15, 16) sich entlang derselben Ebene (P) erstrecken und die geneigten Endabschnitte (18, 19) einen Anstellwinkel mit der Stromrichtung ausbilden, um die Drehung des Laufrads (10) um die Längsachse (A) je nach Richtung des Fluidstroms im Uhrzeigersinn oder gegen den Uhrzeigersinn zu erleichtern.

2. Durchflussmesser nach Anspruch 1, umfassend ein Identifikationselement (11), das an der Welle (7) oder an dem Laufrad (10) befestigt ist und mit der Form des Laufrads (10) korreliert; wobei der rohrförmige Körper (2) aus einem transparenten Material hergestellt ist.

3. Durchflussmesser nach Anspruch 2, wobei das Identifikationselement (11) ein farbiger Ring ist.

4. Durchflussmesser nach einem der vorstehenden Ansprüche, wobei das Laufrad (10) mindestens teilweise aus gesintertem magnetischem Material hergestellt ist, insbesondere durch Formen von gesintertem magnetischem Material auf der Welle (7).

5. Durchflussmesser nach einem der vorstehenden Ansprüche, wobei der Winkel zwischen jedem Mittelabschnitt (17) und den jeweiligen Endabschnitten (18, 19) zwischen 10° und 30° beträgt.

6. Durchflussmesser nach einem der vorstehenden Ansprüche, wobei die erste und die zweite Halterung (8, 9) im Wesentlichen gleich zueinander sind und einander zugewandt angeordnet sind.

7. Durchflussmesser nach Anspruch 6, wobei jede der ersten und der zweiten Halterung (8, 9) einen ringförmigen Körper (12); und einen jeweiligen zylindrischen Körper (13) umfasst, der konfiguriert ist, um mit dem jeweiligen Ende der Welle (7) zu koppeln.

8. Durchflussmesser nach Anspruch 7, wobei jedes Ende der Welle (7) konisch ist; jeder zylindrische Körper (13) eine Aussparung aufweist, um ein jeweiliges Ende der Welle (7) unterzubringen.

9. Durchflussmesser nach einem der vorstehenden Ansprüche und umfassend einen Sitz (3), der an dem rohrförmigen Körper (2) befestigt ist und konfiguriert ist, um den Sensor (4) unterzubringen.

10. Durchflussmesser nach einem der Ansprüche 2 bis 9, wobei der Sensor (4) konfiguriert ist, um die Magnetfeldschwankungen, die durch die Drehung des Laufrads (10) um die Längsachse (A) verursacht werden, zu erfassen; insbesondere, der Sensor (4) ein Hall-Effekt-Sensor ist.

## Revendications

1. Débitmètre axial permettant de mesurer le débit d'un écoulement de fluide dans un conduit, le débitmètre (1) comprenant :
- un corps tubulaire (2) s'étendant le long d'un axe longitudinal (A) et conçu pour transporter le fluide ;
- un arbre (7) situé à l'intérieur du corps tubulaire (2) et conçu pour tourner autour de l'axe longitudinal (A) ;
- un premier et un second support (8, 9), chacun monté dans le corps tubulaire (2) et accouplé de manière rotative à une extrémité respective de l'arbre (7) afin de permettre la rotation de l'arbre (7) autour de l'axe longitudinal (A) ;
- une roue (10) fixée à l'arbre (7) et conçue pour tourner dans le sens des aiguilles d'une montre ou dans le sens inverse des aiguilles d'une montre autour de l'axe longitudinal (A) en fonction de la direction de l'écoulement du fluide ; et
- un capteur (4) accouplé au corps tubulaire (2) et configuré pour détecter la vitesse de rotation de la roue (10) ;
dans lequel la roue (10) n'a que deux aubes (15, 16) disposées sur les côtés opposés de l'arbre (7), le débitmètre axial étant **caractérisé en ce que** les deux aubes (15, 16) s'étendent dans une direction parallèle à l'axe longitudinal (A) et ont deux parties centrales (17) coplanaires respectives ;
et **en ce que** chaque aube (15, 16) a deux parties d'extrémité (18, 19) respectives inclinées par rapport à la partie centrale (17) avec sensiblement les mêmes inclinaisons par rapport à la partie centrale (17) respective ;
les deux aubes (15, 16) s'étendant le long du même plan (P) et les parties d'extrémité (18, 19) inclinées formant un angle d'attaque avec la direction d'écoulement de manière à faciliter la rotation de la roue (10) autour de l'axe longitudinal (A) dans le sens des aiguilles d'une montre ou dans le sens inverse des aiguilles d'une montre en fonction de la direction de l'écoulement du fluide.

2. Débitmètre selon la revendication 1, et comprenant un élément d'identification (11) fixé à l'arbre (7) ou à la roue (10) et corrélé à la forme de la roue (10) ; le corps tubulaire (2) étant constitué d'un matériau transparent.

3. Débitmètre selon la revendication 2, dans lequel l'élément d'identification (11) est un anneau coloré.

4. Débitmètre selon l'une quelconque des revendications précédentes, dans lequel la roue (10) est au moins partiellement constituée d'un matériau magnétique fritté, notamment par moulage d'un matériau magnétique fritté sur l'arbre (7).

5. Débitmètre selon l'une quelconque des revendications précédentes, dans lequel l'angle entre chaque partie centrale (17) et les parties d'extrémité (18, 19) respectives est compris entre 10° et 30°.

6. Débitmètre selon l'une quelconque des revendications précédentes, dans lequel le premier et le second support (8, 9) sont sensiblement égaux l'un à l'autre et sont disposés en regard l'un de l'autre.

7. Débitmètre selon la revendication 6, dans lequel chacun des premier et second supports (8, 9) comprend un corps annulaire respectif (12) ; et un corps cylindrique respectif (13) conçu pour s'accoupler avec l'extrémité respective de l'arbre (7).

8. Débitmètre selon la revendication 7, dans lequel chaque extrémité de l'arbre (7) est conique ; chaque corps cylindrique (13) a une cavité pour loger une extrémité respective de l'arbre (7).

9. Débitmètre selon l'une quelconque des revendications précédentes, et comprenant un siège (3) fixé au corps tubulaire (2) et conçu pour loger le capteur (4).

10. Débitmètre selon l'une quelconque des revendications 2 à 9, dans lequel le capteur (4) est configuré pour détecter les variations du champ magnétique causées par la rotation de la roue (10) autour de l'axe longitudinal (A) ; en particulier, le capteur (4) est un capteur à effet Hall.
